# EUROPEAN PATENT SPECIFICATION

(11) **EP 4 446 577 B1**
(45) Date of publication and mention of the grant of the patent: **01.04.2026**
(21) Application number: 22924211.0
(22) Date of filing: 26.12.2022
(51) Int. Cl.: F02M 55/00, F02M 55/02, F02M 65/00, F02M 37/00

(54) **FUEL SYSTEM**
KRAFTSTOFFSYSTEM
CIRCUIT DE CARBURANT

(30) Priority: 31.01.2022 JP 2022013302
(43) Date of publication of application: 16.10.2024
(73) Proprietor: MITSUBISHI HEAVY INDUSTRIES ENGINE & TURBOCHARGER, LTD., Sagamihara-shi, Kanagawa 252-5293 (JP)
(72) Inventor: WATANABE, Sota, Sagamihara-shi, Kanagawa 252-5293 (JP); OGAWA, Hisao, Sagamihara-shi, Kanagawa 252-5293 (JP); MAEHATA, Kimihiko, Sagamihara-shi, Kanagawa 252-5293 (JP)
(74) Representative: Studio Torta S.p.A.
(86) International application number: PCT/JP2022/047983
(87) International publication number: WO 2023/145364

(56) References cited:
- WO-A1-2005/038232
- WO-A2-2009/147291
- WO-A2-2012/107633
- JP-A- 2009 174 535
- JP-A- 2014 508 245
- JP-A- H1 172 059
- JP-A- H1 172 059
- JP-U- S58 162 278

## Description

### Field

The present disclosure relates to a fuel system applied to an internal combustion engine.

### Background

For example, a common rail fuel injection device applied to a diesel engine includes a fuel pump, a common rail, and a fuel injection valve. The fuel pump takes in fuel from a fuel tank, applies pressure to the fuel, and supplies the pressurized fuel to the common rail as high-pressure fuel. The common rail holds the high-pressure fuel supplied from the fuel pump at a predetermined pressure. The fuel injection valve injects the high-pressure fuel in the common rail into a combustion chamber of the diesel engine, by opening and closing the injection valve.

Fuel is supplied to the fuel injection valve, by connecting the fuel injection valve to the common rail via a fuel supply pipe. Hence, the fuel injection valve can inject high-pressure fuel into the combustion chamber. In the fuel injection valve, excess fuel is generated after the fuel injection valve injects a predetermined amount of fuel. The excess fuel can be returned to the fuel tank, by connecting the fuel injection valve to the fuel tank via a fuel return pipe. Moreover, the fuel supply pipe is connected to the fuel injection valve in a state where an end of the fuel supply pipe is pressed against a fuel supply port of the fuel injection valve (metal touch). Therefore, a fuel leak may occur at the connection part between the fuel injection valve and the fuel supply pipe. Therefore, the fuel injection valve is coupled to a leaked fuel return pipe that returns, to the fuel tank, the fuel having leaked at the connection part between the fuel supply pipe and the fuel injection valve. For example, such a fuel system includes those disclosed in the following Patent Literatures.

### Citation List

### Patent Literature

Patent Literature 1: European Patent No. 2011996
Patent Literature 2: European Patent No. 1680592
Patent Literature 3: PCT publication WO 2012/107633 A1

### Summary

### Technical Problem

Conventionally, the fuel that has leaked from the connection part between the fuel injection valve and the fuel supply pipe is returned to the fuel tank through the leaked fuel return pipe. The end of the leaked fuel return pipe on the downstream side is coupled to the fuel return pipe, and the leaked fuel is returned to the fuel tank with excess fuel. A plurality of fuel injection valves are installed in the diesel engine. Therefore, in the conventional configuration, it is difficult to identify the fuel injection valve from which fuel is leaking. Therefore, it is considered that a detection hole for checking a fuel leak is provided on the leaked fuel return pipe. However, in this case, if a fuel leak occurs, there is a problem in that the leaked fuel is discharged to the outside through the detection hole.

The present disclosure has been made to solve the problem described above, and an object of the present disclosure is to provide a fuel system capable of preventing fuel from leaking outside, and appropriately detecting a cylinder in which fuel is leaking from a connection part between a fuel injection valve and a fuel supply passage.

### Solution to Problem

To achieve the above-described object, a fuel system according to the present disclosure includes: a fuel injection valve; a fuel supply passage that supplies fuel to the fuel injection valve; a fuel return passage that returns excess fuel of the fuel injection valve; a leaked fuel return passage that discharges, to the fuel return passage, fuel leaked from a connection part between the fuel injection valve and the fuel supply passage; an inspection hole that is provided on the leaked fuel return passage and is openable and closable by a plug member; and a check valve that is provided on the leaked fuel return passage to prevent fuel from flowing to the connection part side.

### Advantageous Effects of Invention

According to the fuel system of the present disclosure, it is possible to prevent fuel from leaking outside, and appropriately detect a cylinder in which fuel is leaking from the connection part between the fuel injection valve and the fuel supply passage.

### Brief Description of Drawings

FIG. 1 is a schematic diagram illustrating a fuel system of a first embodiment.
FIG. 2 is a schematic diagram illustrating a fuel leak detection device in the fuel system.
FIG. 3 is a schematic diagram illustrating a fuel leak detection device in a fuel system of a second embodiment. Description of Embodiments

Hereinafter, with reference to the accompanying drawings, preferred embodiments of the present disclosure will be described in detail. However, the present disclosure is not limited to the embodiments, and when there are a plurality of embodiments, the present disclosure also includes those configured by combining the embodiments. Moreover, components in the embodiments include components that can be easily assumed by those skilled in the art, components substantially the same, and components that fall within a so-called range of equivalents.

### [First Embodiment]

### <Fuel System>

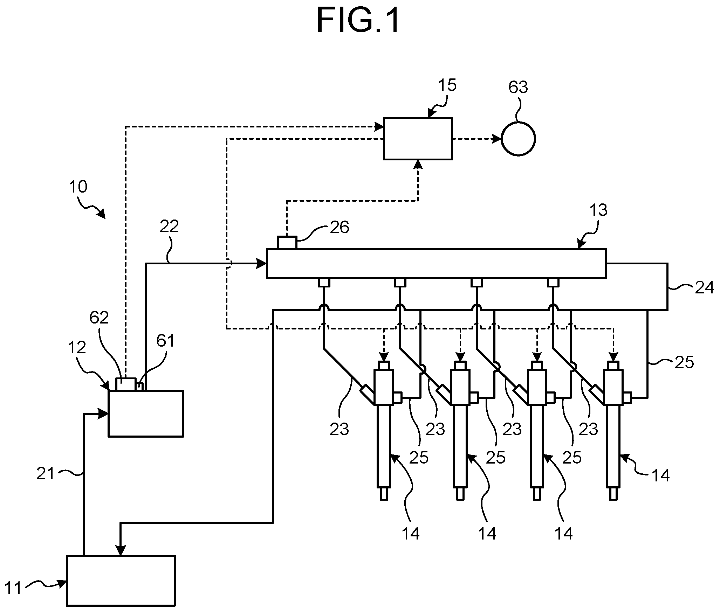

FIG. 1 is a schematic diagram illustrating a fuel system of a first embodiment.

As illustrated in FIG. 1, a fuel system 10 is installed in a diesel engine (internal combustion engine). The fuel system 10 includes a fuel tank 11, a fuel pump 12, a common rail 13, a plurality of fuel injection valves 14, and a control device 15.

The fuel tank 11 stores a predetermined amount of fuel. The fuel tank 11 is coupled to the fuel pump 12 via a fuel intake passage 21. The fuel pump 12 generates high-pressure fuel, by taking in fuel stored in the fuel tank 11 through the fuel intake passage 21 and applying pressure to the fuel. The fuel pump 12 is connected to the common rail 13 via a fuel high-pressure passage 22. The common rail 13 adjusts the high-pressure fuel supplied from the fuel pump 12 at a predetermined pressure set in advance. The common rail 13 is connected to each of the fuel injection valves 14 via a plurality (four in the first embodiment) of fuel supply passages 23. The fuel injection valve 14 injects the high-pressure fuel in the common rail 13 into each cylinder (combustion chamber) of the diesel engine by opening and closing the injection valve at a certain timing.

The common rail 13 is coupled to the fuel tank 11 via the fuel return passage 24. Because the common rail 13 adjusts the stored high-pressure fuel at a predetermined pressure, when the high-pressure fuel rises exceeding the predetermined pressure, excess fuel is returned to the fuel tank 11 through the fuel return passage 24. Each fuel injection valve 14 is coupled to the fuel return passage 24 via a fuel return passage 25. The fuel injection valve 14 injects a predetermined amount of fuel according to the operating state of the diesel engine, resulting in excess fuel. The generated excess fuel is returned to the fuel tank 11 from the fuel injection valve 14 through the fuel return passage 25 and the fuel return passage 24.

The control device 15 can drive and control each fuel injection valve 14. The control device 15 drives and controls the fuel injection valve 14 according to the operating state of the diesel engine, and injects a predetermined amount of fuel into the cylinder for a predetermined period of time at a certain timing. The common rail 13 is provided with a pressure sensor 26. The pressure sensor 26 measures the pressure of the high-pressure fuel stored in the common rail 13, and outputs a measured result to the control device 15. On the basis of the measurement result of the pressure sensor 26, when the high-pressure fuel in the common rail 13 exceeds a predetermined pressure, the control device 15 activates a pressure limiter (not illustrated), and returns a part of the high-pressure fuel in the common rail 13 to the fuel tank 11 through the fuel return passage 24, as excess fuel.

### <Configuration of Fuel Leak Detection Device>

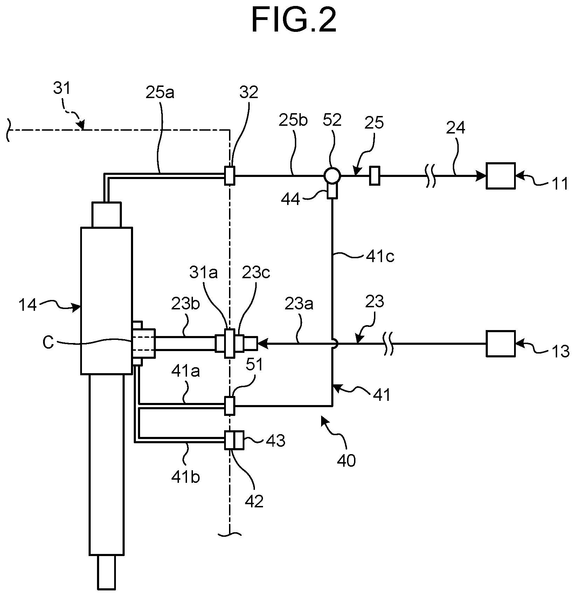

FIG. 2 is a schematic diagram illustrating a fuel leak detection device in the fuel system.

As illustrated in FIG. 2, the fuel injection valve 14 is mounted on a cylinder head 31 of the diesel engine, and can inject fuel into the cylinder. The common rail 13 is connected to the fuel injection valve 14 via the fuel supply passage 23. The fuel injection valve 14 is coupled to the fuel return passage 24 via the fuel return passage 25, and the fuel return passage 24 is coupled to the fuel tank 11. The fuel return passage 25 includes a first pipe 25a and a second pipe 25b. The first pipe 25a is disposed inside the cylinder head 31, and the second pipe 25b is disposed outside the cylinder head 31. The first pipe 25a and the second pipe 25b are coupled to each other via a connector 32 fixed to the cylinder head 31.

Specifically, the fuel supply passage 23 includes a first pipe 23a and a second pipe 23b. The first pipe 23a is disposed outside the cylinder head 31, and the second pipe 23b is disposed inside the cylinder head 31. For example, the second pipe 23b is housed in a hollow part (not illustrated) formed in the cylinder head 31. The second pipe 23b is fixed to the cylinder head 31, by screwing a screw part 23c formed on the outer peripheral part into a screw part 31a provided on the cylinder head 31. In this process, the second pipe 23b is fixed to the cylinder head 31, while the end of the second pipe 23b on the downstream side is pressed against a side of the fuel injection valve 14, that is, in a pressed state. Therefore, the opening on the end of the second pipe 23b on the downstream side communicates with a fuel supply hole formed on the side of the fuel injection valve 14. Then, the first pipe 23a is coupled to the end of the second pipe 23b that is exposed to the outside from the cylinder head 31.

The second pipe 23b forming the fuel supply passage 23 is fixed to the cylinder head 31, while the end of the second pipe 23b is pressed against the side of the fuel injection valve 14, that is, in a pressed state. In this case, the second pipe 23b and the fuel injection valve 14 are metal touched. Hence, fuel may leak from a connection part C between the second pipe 23b of the fuel supply passage 23 and the fuel injection valve 14. Therefore, the fuel system 10 of the first embodiment includes a fuel leak detection device 40.

The fuel leak detection device 40 includes a leaked fuel return passage 41, an inspection hole 42, a plug member 43, and a check valve 44.

The leaked fuel return passage 41 discharges the fuel leaked from the connection part C between the fuel injection valve 14 and the fuel supply passage 23, to the fuel return passages 24 and 25. In other words, one end of the leaked fuel return passage 41 is coupled to the outside of the connection part C between the fuel injection valve 14 and the fuel supply passage 23, and the other end is coupled to the fuel return passage 25. The leaked fuel return passage 41 includes a first pipe 41a, a second pipe 41b, and a third pipe 41c. The first pipe 41a and the second pipe 41b are disposed inside the cylinder head 31, and the third pipe 41c is disposed outside the cylinder head 31.

One end of the first pipe 41a is coupled to the connection part C between the fuel injection valve 14 and the fuel supply passage 23, and the other end is coupled to a connector 51 fixed to an outer surface part of the cylinder head 31. One end of the second pipe 41b is coupled to the first pipe 41a, and the other end is coupled to the inspection hole 42 provided on the outer surface part of the cylinder head 31. The inspection hole 42 is disposed at the lowest position in the vertical direction in the first pipe 41a and the second pipe 41b serving as the leaked fuel return passage 41. Therefore, when fuel leaks from the connection part C between the fuel supply passage 23 and the fuel injection valve 14, the leaked fuel can be discharged from the inspection hole 42 through the first pipe 41a and the second pipe 41b. The inspection hole 42 is openable and closable by the plug member 43. When the inspection hole 42 is closed by the plug member 43, the leaked fuel is prevented from being discharged.

One end of the third pipe 41c is coupled to the first pipe 41a via the connector 51, and the other end is coupled to a connector 52 of the second pipe 25b in the fuel return passage 25. The check valve 44 is provided on the third pipe 41c in the leaked fuel return passage 41. That is, the check valve 44 is disposed outside the cylinder head 31. The check valve 44 is preferably provided on a coupled part between the third pipe 41c of the leaked fuel return passage 41 and the second pipe 25b of the fuel return passage 25, that is, in the vicinity of the connector 52. The check valve 44 allows fuel to flow from the connection part C, that is, from the leaked fuel return passage 41 to the second pipe 25b of the fuel return passage 25. On the other hand, the check valve 44 prevents fuel from flowing from the second pipe 25b of the fuel return passage 25 to the connection part C side, that is, to the third pipe 41c of the leaked fuel return passage 41.

Four fuel injection valves 14 are mounted on the cylinder head 31, and the fuel return passage 25 coupled to each of the four fuel injection valves 14 is coupled to the fuel return passage 24. The leaked fuel return passage 41 coupled to each fuel injection valve 14 is coupled to one of the fuel return passages 25. Four fuel injection valves 14 are mounted on the cylinder head 31 if the cylinder head 31 is integrally formed. However, if an individual cylinder head 31 is used for each cylinder, one fuel injection valve 14 is mounted on each cylinder head 31.

Moreover, as illustrated in FIG. 1, the fuel pump 12 is provided with a pressure sensor 61 that measures the pressure (discharge pressure) for supplying high-pressure fuel to the common rail 13 via the fuel high-pressure passage 22, and an actuator 62 that controls the discharge amount to maintain the pressure constant. A detection result is output to the control device 15. The control device 15 is connected to an alarm 63. For example, the alarm 63 is a speaker, a rotary beacon light, a display, or the like. The control device 15 activates the alarm 63 when the operation amount of the actuator of the fuel pump 12 is greater than the operation amount set in advance. A flow rate sensor may be used instead of the operation amount of the actuator 62.

### <Operation of Fuel Leak Detection Device>

As illustrated in FIG. 1 and FIG. 2, when the fuel pump 12 is driven, the fuel pump 12 generates high-pressure fuel, by taking in fuel stored in the fuel tank 11 from the fuel intake passage 21 and applying pressure to the fuel. When the fuel pump 12 supplies the high-pressure fuel to the common rail 13 from the fuel high-pressure passage 22, the common rail 13 adjusts the high-pressure fuel supplied from the fuel pump 12 at a predetermined pressure. In this process, each fuel injection valve 14 returns excess fuel to the fuel tank 11 from the fuel return passage 25 via the fuel return passage 24.

In this process, in the fuel supply passage 23, the end of the second pipe 23b is pressed against the fuel injection valve 14, that is, in a pressed state. Hence, fuel may leak from the connection part C between the second pipe 23b of the fuel supply passage 23 and the fuel injection valve 14. The fuel leak detection device 40 detects a fuel leak from the connection part C. Detection of a fuel leak from the connection part C is performed by the fuel leak detection device 40 before the diesel engine is shipped out, during a periodic inspection of the diesel engine, and the like. However, the detection may be performed at other times.

When fuel leaks from the connection part C between the second pipe 23b of the fuel supply passage 23 and the fuel injection valve 14, the leaked fuel flows into the first pipe 41a and into the second pipe 41b of the leaked fuel return passage 41. The leaked fuel flowed into the first pipe 41a flows into the third pipe 41c via the connector 51, and further flows into the fuel return passage 25 via the check valve 44 and the connector 52. Therefore, the leaked fuel from the connection part C is returned to the fuel tank 11 via the fuel return passage 24 with the excess fuel that flows through the fuel return passage 25, and does not leak to the outside.

Moreover, in the leaked fuel return passage 41, the check valve 44 is provided on the third pipe 41c. Therefore, the excess fuel that flows through the fuel return passage 25 and the leaked fuel that flows into the fuel return passage 25 from the leaked fuel return passage 41 do not flow back to the leaked fuel return passage 41 side.

On the other hand, the leaked fuel that flows into the second pipe 41b reaches the inspection hole 42. However, because the inspection hole 42 is mounted with and closed by the plug member 43, the leaked fuel does not leak to the outside from the inspection hole 42. When a fuel leak from the connection part C is detected by the fuel leak detection device 40, the operator removes the plug member 43 from the inspection hole 42. In this process, if fuel is leaking from the connection part C, the leaked fuel is discharged to the outside through the inspection hole 42. On the other hand, if fuel is not leaking from the connection part C, the leaked fuel will not be discharged to the outside through the inspection hole 42. The operator determines a fuel leak from the connection part C, according to whether fuel is discharged from the inspection hole 42.

Moreover, during normal operation of the diesel engine, if fuel is leaking from the connection part C, the consumption amount of the high-pressure fuel stored in the common rail 13 will be increased. Hence, the fuel pump 12 needs to supply a large amount of fuel to the common rail 13, and the discharge amount of the fuel pump 12 will be increased. Therefore, the control device 15 activates the alarm 63 when the operation amount of the actuator 62 of the fuel pump 12 exceeds the operation amount set in advance. When the alarm 63 is activated, the operator performs the operation of detecting a fuel leak from the connection part C using the fuel leak detection device 40.

### [Second Embodiment]

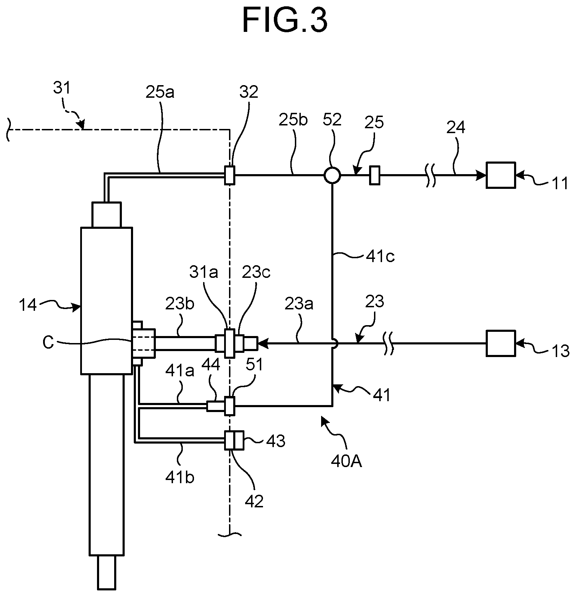

FIG. 3 is a schematic diagram illustrating a fuel leak detection device in a fuel system of a second embodiment. Members having the same functions as those in the first embodiment described above are denoted by the same reference numerals, and the detailed description thereof will be omitted.

As illustrated in FIG. 3, a fuel leak detection device 40A includes the leaked fuel return passage 41, the inspection hole 42, the plug member 43, and the check valve 44.

One end of the leaked fuel return passage 41 is coupled to the connection part C between the fuel injection valve 14 and the fuel supply passage 23, and the other end is coupled to the fuel return passage 25. The check valve 44 is provided on the first pipe 41a in the leaked fuel return passage 41. That is, the check valve 44 is disposed inside the cylinder head 31. The check valve 44 is preferably provided on a coupled part between the first pipe 41a and the second pipe 41b in the leaked fuel return passage 41, that is, in the vicinity of the connector 51. The check valve 44 allows fuel to flow from the connection part C, that is, from the first pipe 41a to the second pipe 41b in the leaked fuel return passage 41. On the other hand, the check valve 44 prevents fuel from flowing from the second pipe 41b of the leaked fuel return passage 41 to the connection part C side, that is, to the first pipe 41a.

The activation of the fuel leak detection device 40A is the same as that of the fuel leak detection device 40 in the first embodiment. Hence, the description thereof will be omitted.

### [Effects of Present Embodiment]

The fuel system according to a first aspect includes the fuel injection valve 14, the fuel supply passage 23 that supplies fuel to the fuel injection valve 14, the fuel return passages 24 and 25 that return excess fuel of the fuel injection valve 14, the leaked fuel return passage 41 that discharges, to the fuel return passages 24 and 25, fuel leaked from the connection part C between the fuel injection valve 14 and the fuel supply passage 23, the inspection hole 42 provided on the leaked fuel return passage 41 and that is openable and closable by the plug member 43, and the check valve 44 provided on the leaked fuel return passage 41 and that prevents fuel from flowing to the connection part C side.

With the fuel system according to the first aspect, when fuel leaks from the connection part C, the leaked fuel is discharged to the fuel return passage 25 from the leaked fuel return passage 41. In this process, the inspection hole 42 provided on the leaked fuel return passage 41 is closed by the plug member 43. Hence, fuel is prevented from leaking through the inspection hole 42. Moreover, the leaked fuel return passage 41 is provided with the check valve 44. Hence, fuel in the fuel return passage 25 is prevented from flowing back to the connection part C side via the leaked fuel return passage 41. Then, the operator can detect a fuel leak from the connection part C when removing the plug member 43 from the inspection hole 42 and checking whether fuel is discharged from the inspection hole 42. As a result, it is possible to prevent fuel from leaking outside, and to appropriately detect a cylinder in which fuel is leaking from the connection part C between the fuel injection valve 14 and the fuel supply passage 23.

In the fuel system according to a second aspect, the check valve 44 is provided in the vicinity of the connector 52, which is a coupled part between the leaked fuel return passage 41 and the fuel return passage 25. Consequently, it is possible to prevent fuel from flowing back to the leaked fuel return passage 41 from the fuel return passage 25, and to appropriately discharge the fuel leaked from the connection part C.

In the fuel system according to a third aspect, the inspection hole 42 is disposed at the lowest position in the vertical direction in the leaked fuel return passage 41. Consequently, it is possible to allow the fuel leaked from the connection part C to flow to the inspection hole 42 by its own weight, and to appropriately detect the cylinder in which fuel is leaking from the connection part C.

In the fuel system according to a fourth aspect, the check valve 44 is disposed outside the cylinder head 31 on which the fuel injection valve 14 is mounted. Consequently, it is possible to improve the maintainability of the check valve 44.

In the fuel system according to a fifth aspect, the check valve 44 is disposed inside the cylinder head 31 on which the fuel injection valve 14 is mounted. Consequently, it is possible to improve the assemblability.

In the fuel system according to a sixth aspect, a plurality of the fuel injection valves 14 are disposed, a plurality of the fuel return passages 25 coupled to the fuel injection valves 14 are coupled to each other, and a plurality of the leaked fuel return passages 41 coupled to the fuel injection valves 14 are coupled to one of the fuel return passages 25. Consequently, it is possible to allow fuel leaked from each connection part C to the fuel return passage 25 from the leaked fuel return passage 41, and to appropriately discharge the leaked fuel to the outside.

In the embodiments described above, the fuel system 10 includes the fuel tank 11, the fuel pump 12, the common rail 13, the fuel injection valve 14, and the control device 15. However, the forms of the constituent members are not limited to those described in the above embodiments. The arrangements and connections of the constituent members may be set as appropriate.

### Reference Signs List

- 10: Fuel system
- 11: Fuel tank
- 12: Fuel pump
- 13: Common rail
- 14: Fuel injection valve
- 15: Control device
- 21: Fuel intake passage
- 22: Fuel high-pressure passage
- 23: Fuel supply passage
- 24, 25: Fuel return passage
- 26: Pressure sensor
- 31: Cylinder head
- 32: Connector
- 40, 40A: Fuel leak detection device
- 41: Leaked fuel return passage
- 42: Inspection hole
- 43: Plug member
- 44: Check valve
- 51: Connector
- 52: Connector (coupled part)
- 61: Pressure sensor
- 62: Actuator
- 63: Alarm
- C: Connection part

## Claims

1. A fuel system (10), comprising:
a fuel injection valve (14);
a fuel supply passage (23) that supplies fuel to the fuel injection valve;
a fuel return passage (24, 25) that returns excess fuel of the fuel injection valve;
the fuel system is **characterised in that** it further comprises:
a leaked fuel return passage (41) that discharges, to the fuel return passage, fuel leaked from a connection part (C) between the fuel injection valve and the fuel supply passage;
an inspection hole (42) that is provided on the leaked fuel return passage and is openable and closable by a plug member (43); and
a check valve (44) that is provided on the leaked fuel return passage to prevent fuel from flowing to the connection part side.

2. The fuel system according to claim 1, wherein the check valve is provided on a coupled part between the leaked fuel return passage and the fuel return passage.

3. The fuel system according to claim 1 or 2, wherein the inspection hole is disposed at a lowest position in a vertical direction in the leaked fuel return passage.

4. The fuel system according to claim 1, wherein the check valve is disposed outside a cylinder head on which the fuel injection valve is mounted.

5. The fuel system according to claim 1, wherein the check valve is disposed inside the cylinder head on which the fuel injection valve is mounted.

6. The fuel system according to claim 1, wherein
a plurality of the fuel injection valves are disposed,
a plurality of the fuel return passages coupled to the fuel injection valves are coupled to each other, and
a plurality of the leaked fuel return passages coupled to the fuel injection valves are coupled to one of the fuel return passages.

## Patentansprüche

1. Kraftstoffsystem (10), umfassend:
ein Kraftstoffeinspritzventil (14);
einen Kraftstoffzufuhrtrakt (23), der dem Kraftstoffeinspritzventil Kraftstoff zuführt;
einen Kraftstoffrückführtrakt (24, 25), der überschüssigen Kraftstoff von dem Kraftstoffeinspritzventil zurückführt;
wobei das Kraftstoffsystem **dadurch gekennzeichnet ist, dass** es ferner umfasst:
einen Leckkraftstoffrückführtrakt (41), der an den Kraftstoffrückführtrakt einen Kraftstoff, der aus einem Verbindungsteil (C) zwischen dem Kraftstoffeinspritzventil und dem Kraftstoffzufuhrtrakt geleckt ist, ausstößt;
ein Inspektionsloch (42), das an dem Leckkraftstoffrückführtrakt bereitgestellt ist und durch ein Stopfenglied (43) öffenbar und schließbar ist; und
ein Rückschlagventil (44), das an dem Leckkraftstoffrückführtrakt bereitgestellt ist, um zu verhindern, dass Kraftstoff zu der Verbindungsteilseite fließt.

2. Kraftstoffsystem nach Anspruch 1, wobei das Rückschlagventil an einem gekoppelten Teil zwischen dem Leckkraftstoffrückführtrakt und dem Kraftstoffrückführtrakt bereitgestellt ist.

3. Kraftstoffsystem nach Anspruch 1 oder 2, wobei das Inspektionsloch an einer untersten Position in einer vertikalen Richtung in dem Leckkraftstoffrückführtrakt angeordnet ist.

4. Kraftstoffsystem nach Anspruch 1, wobei das Rückschlagventil außerhalb eines Zylinderkopfes angeordnet ist, an dem das Kraftstoffeinspritzventil montiert ist.

5. Kraftstoffsystem nach Anspruch 1, wobei das Rückschlagventil innerhalb des Zylinderkopfes angeordnet ist, an dem das Kraftstoffeinspritzventil montiert ist.

6. Kraftstoffsystem nach Anspruch 1, wobei
eine Mehrzahl der Kraftstoffeinspritzventile angeordnet sind,
eine Mehrzahl der Kraftstoffrückführtrakte, die mit den Kraftstoffeinspritzventilen gekoppelt sind, miteinander gekoppelt sind, und
eine Mehrzahl der Leckkraftstoffrückführtrakte, die mit den Kraftstoffeinspritzventilen gekoppelt sind, mit einem der Kraftstoffrückführtrakte gekoppelt sind.

## Revendications

1. Système de carburant (10), comprenant:
une soupape d'injection de carburant (14) ;
un passage d'alimentation en carburant (23) qui fournit du carburant à la soupape d'injection de carburant ;
un passage de retour de carburant (24, 25) qui renvoie l'excès de carburant de la soupape d'injection de carburant ;
le système de carburant étant **caractérisé en ce qu'**il comprend en outre :
un passage de retour de fuite de carburant (41) qui évacue, vers le passage de retour de carburant, le carburant qui fuit d'une pièce de raccordement (C) entre la soupape d'injection de carburant et le passage d'alimentation en carburant ;
un orifice d'inspection (42) qui est prévu sur le passage de retour de fuite de carburant et qui peut être ouvert et fermé par un élément formant bouchon (43) ; et
un clapet anti-retour (44) qui est prévu sur le passage de retour de fuite de carburant pour empêcher le carburant de s'écouler vers le côté de la pièce de raccordement.

2. Système de carburant selon la revendication 1, dans lequel le clapet anti-retour est prévu sur une pièce accouplée entre le passage de retour de fuite de carburant et le passage de retour de carburant.

3. Système de carburant selon la revendication 1 ou 2, dans lequel l'orifice d'inspection est situé au niveau d'une position la plus basse dans une direction verticale du passage de retour de fuite de carburant.

4. Système de carburant selon la revendication 1, dans lequel le clapet anti-retour est disposé à l'extérieur d'une culasse sur laquelle est montée la soupape d'injection de carburant.

5. Système de carburant selon la revendication 1, dans lequel le clapet anti-retour est disposé à l'intérieur de la culasse sur laquelle est montée la soupape d'injection de carburant.

6. Système de carburant selon la revendication 1, dans lequel
une pluralité des soupapes d'injection de carburant sont disposées,
une pluralité des passages de retour de carburant accouplés aux soupapes d'injection de carburant sont accouplés les uns aux autres, et
une pluralité des passages de retour de fuite de carburant accouplés aux soupapes d'injection de carburant sont accouplés à l'un des passages de retour de carburant.
